# FASCICULE DE BREVET EUROPEEN

(11) **EP 0 805 611 B1**
(45) Date de publication et mention de la délivrance du brevet: **11.07.2001**
(21) Numéro de dépôt: 97460017.3
(22) Date de dépôt: 29.04.1997
(51) Int. Cl.: H04Q 7/38

(54) **Réseau local d'accès à des mobiles**
Lokales Netz mit Zugang zu mobilen Teilnehmern
Local access network to mobiles

(30) Priorité: 30.04.1996 FR 9605658
(43) Date de publication de la demande: 05.11.1997
(73) Titulaire: FRANCE TELECOM SA, 75015 Paris (FR)
(72) Inventeur: Quinquis Jean-Paul, 22700 Perros-Guirec (FR); Roussel, Olivier, 22700 Perros Guirec (FR); Hue, Laurent, 22300 Lannion (FR)
(74) Mandataire: Maillet, Alain

(56) Documents cités:
- EP-A- 0 426 269
- EP-A- 0 660 625
- GHAI R ET AL: "A PROTOCOL FOR SEAMLESS COMMUNICATION IN A PICOCELLULAR NETWORK" SERVING HUMANITY THROUGH COMMUNICATIONS. SUPERCOMM/ICC, NEW ORLEANS, MAY 1 - 5, 1994, vol. VOL. 1, no. -, 1 mai 1994 (1994-05-01), pages 192-196, XP000438908 INSTITUTE OF ELECTRICAL AND ELECTRONICS ENGINEERS

## Description

La présente invention concerne un réseau local d'accès à des mobiles.

On connaît déjà des réseaux d'accès à des mobiles et on pourra se reporter utilement au document de brevet FR-A-2 714 559 qui décrit un tel réseau constitué d'un double bus sur lequel sont interconnectées, par exemple par l'intermédiaire de noeuds de concentration, des bornes radio auxquelles peuvent se raccorder des stations mobiles dites encore mobiles.

A terme, les communications entre mobiles ou entre un mobile et un autre locuteur ne seront pas seulement phoniques mais pourront nécessiter le transport de données représentatives par exemple d'images fixes ou animées qui justifient l'utilisation de réseaux multidébits, voire large bande. Par nature, la technologie ATM (Asynchronous Transfer Mode) assure le transport d'informations de toute nature à des débits variés.

Un premier but de l'invention est de proposer un réseau local d'accès à des mobiles qui supporte cette technologie ATM.

On connaît des réseaux locaux d'accès à des mobiles qui sont constitués d'un réseau de distribution lui-même constitué d'une pluralité de noeuds reliés à un concentrateur auquel est reliée au moins une borne radio prévue pour communiquer avec des mobiles rattachés à ladite borne (BR) Au moins un desdits noeuds dudit réseau de distribution est relié, par l'intermédiaire d'un équipement d'aiguillage à un commutateur de canaux virtuels

La demande croissante de services de communication entre mobiles a pour effet d'accroître la densité du trafic que doit être en mesure de traiter chaque borne radio du réseau local d'accès. Afin d'assurer une meilleure couverture radio des zones urbaines tout en tenant compte des performances nécessairement limitées desdites bornes radio, on est amené à réduire la couverture de chaque borne radio et à proposer des réseaux orientés vers des architectures microcellulaires. Néanmoins, ceci pose le problème de la multiplication très significative des procédures de signalisation, notamment lorsque les mobiles passeront de la couverture radio d'une borne vers celle d'une autre borne, pendant les phases dites, dans le domaine de la technique "phases de hand-over". Les procédures de gestion des phases de "hand-over" engendrent des processus de traitement qui risquent de saturer rapidement les organes de commande du réseau terrestre,

Dans le document qui est mentionné ci-dessus, on a déjà résolu ce problème de saturation Il y est en effet décrit une procédure de gestion des phases de hand-over rapide dans laquelle les liens ATM supports sont créés et modifiés en temps réel Selon cette procédure, un mobile, déjà rattaché à une première borne, est pris en charge par une seconde borne qu'il vient d'atteindre A cet instant, la nouvelle borne charge le réseau d'accès ATM d'établir la ou les connexions virtuelles nécessaires pour que ledit mobile puisse, d'une part, acheminer son trafic usager vers son correspondant et, d'autre part, pour qu'il soit en mesure de recevoir le trafic en provenance de ce même correspondant Tous les traitements nécessaires à cette opération sont effectués dans les concentrateurs en périphérie du réseau auxquels sont reliées la première et la seconde bornes

Ainsi, le risque de saturation des organes de traitements des phases de hand over est évité et la capacité de gérer un nombre très important de mobiles est garantie. Un autre avantage réside dans le fait que la commutation par circuit virtuel en ATM déroule des processus de bas niveau dont les vitesses de traitement garantissent des établissements de connexions extrêmement rapides.

La procédure décrite dans ce document peut néanmoins présenter des limites dans certaines situations de surcharge de trafic d'appels au niveau d'un même concentrateur et/ou en présence de fluctuations brutales des conditions de propagation radio. Le temps de réaction du réseau peut alors se révéler trop long pour les performances et la qualité de service attendus.

Dans un contexte quelque peu différent, Rohit Ghai et Suresh Singh ont proposé dans un article paru dans IEEE de mai 1994 et intitulé "A protocol for seamless communication in a picocellular network" un réseau à picocellules, extrapolation de réseaux connus à microcellules. Un réseau à microcellules est un réseau dans lequel une aire géographique est divisée en un certain nombre de régions appelées microcellules. Chaque microcellule contient une borne à laquelle peut se raccorder un mobile et toutes les bornes sont reliées au réseau. Les picocellules sont similaires aux microcellules avec pour différence que la zone qu'elles couvrent est de l'ordre de la dizaine de mètres, contrairement à ces dernières dont les dimensions sont de l'ordre de plusieurs centaines de mètres

Dans l'article mentionné ci-dessus, il est également proposé de regrouper les microcellules en groupes prédéterminés, la forme et la constitution de chaque groupe étant déterminées par l'architecture du local. Un mobile qui est raccordé à une borne d'une cellule est également en communication avec les microcellules du même groupe.

On connaît également par le document de brevet EP-A-426 269 un système de communication de mobiles qui utilise un réseau constitué de réseaux optiques passifs (PON comme Passive Optical Network) aux extrémités desquels sont respectivement connectées des bornes de communication à des mobiles Dans ce document, les bornes reliées au même réseau optique PON appartiennent à un même groupe, qui est similaire au groupe mentionné ci-dessus

Dans le présent contexte, ces groupes sont appelés macrocellules. Ainsi, la présente invention concerne un réseau d'accès à des mobiles du type comportant une pluralité de bornes radio reliées, par l'intermédiaire de concentrateurs, à un réseau de distribution. Ce réseau est prévu pour créer, pour une communication d'un mobile, les connexions virtuelles du réseau vers les bornes qui couvrent une macrocellule constituée d'un groupe prédéterminé de cellules radio sous la couverture desquelles ledit mobile se trouve ou est susceptible de se déplacer.

Comme dans les documents susmentionnés, la mise en oeuvre de macrocellules permet d'anticiper les déplacements d'un mobile du fait que les connexions virtuelles nécessaires à la communication sont déjà établies lorsque le mobile arrive sur une nouvelle borne, dite borne d'accueil. Le mobile, tout en se déplaçant, reçoit donc sans délais ses informations usager.

Le but de la présente invention est de proposer un procédé qui permette d'établir et libérer les connexions virtuelles nécessaires pour la gestion des macrocellules lorsque le mobile se déplace d'une borne à une autre d'un réseau tel que celui précédemment décrit. Il est aussi de proposer un réseau d'accès pour la mise en oeuvre de ce procédé.

Afin d'atteindre ce but, un réseau selon l'invention est caractérisé en ce qu'à chaque borne dudit réseau est associée une macrocellule prédéterminée, ladite borne étant alors dite la borne noyau de ladite macrocellule, et en ce que ledit réseau est prévu pour, lorsqu'un mobile passe sous la couverture d'une borne, dite ancienne borne à une autre, dite borne d'accueil, créer les connexions virtuelles vers les bornes couvrant la macrocellule associée à ladite ancienne borne et libérer les connexions virtuelles vers les bornes qui appartenaient à la macrocellule associée à l'ancienne borne et qui n'appartiennent pas à la macrocellule associée à ladite borne d'accueil.

Ainsi, une macrocellule glisse en même temps que le mobile.

Avantageusement, la libération des connexions virtuelles vers les bornes qui appartenaient à la macrocellule associée à l'ancienne borne et qui n'appartiennent pas à la macrocellule associée à ladite borne d'accueil est retardée d'une durée prédéterminée.

Lorsque les cellules radio respectivement couvertes par des bornes dudit réseau s'étendent en une zone géographique dense, chaque macrocellule est avantageusement couverte par un ensemble constitué de la borne noyau de ladite macrocellule et des bornes voisines de ladite borne noyau, ou directement voisines de ladite borne noyau. Cette configuration de chaque macrocellule est par exemple destinée à des zones géographiques denses telles que des villes, etc.

Lorsque les cellules radio respectivement couvertes par des bornes dudit réseau s'étendent en une zone géographique linéaire, ce qui est, par exemple le cas pour des cellules radio couvrant une route ou une autoroute, chaque macrocellule est couverte par un ensemble linéaire constitué de la borne noyau de ladite macrocellule et des bornes voisines de la borne noyau. Par exemple, chaque macrocellule est couverte par un ensemble de trois bornes voisines alignées et ladite borne noyau est la borne centrale Elle peut également être couverte par un ensemble de deux bornes voisines, ladite borne noyau étant la borne qui se trouve à l'arrière par rapport au sens de déplacement du mobile concerné.

Selon une autre caractéristique de l'invention, le réseau de l'invention comporte une table dans laquelle sont décrites et enregistrées les caractéristiques de chaque macrocellule dudit réseau, notamment la borne noyau de ladite macrocellule et les bornes voisines qui la composent.

Selon une autre caractéristique de l'invention, il comporte au moins un processeur qui, à la réception d'une requête émanant d'un mobile qui vient d'arriver sous la couverture d'une nouvelle borne, dite borne d'accueil, transmet au ou aux concentrateurs concernés un message pour la création et la libération des connexions virtuelles nécessaires à la création et à l'effacement des macrocellules concernées. Ladite requête contient notamment les identificateurs de canaux et conduits virtuels affectés à la communication concernée ainsi que l'image de l'ancienne macrocellule.

Selon un premier mode de réalisation de l'invention, il comporte un processeur qui est centralisé. Ladite requête est alors transmise au concentrateur auquel est reliée ladite borne d'accueil par un canal établi en permanence et identifié, au niveau de ladite borne d'accueil, par un unique couple d'identicateurs de conduits et canaux virtuels, ladite requête étant émise dudit concentrateur audit processeur centralisé sur un canal identifié, d'une part, par un identificateur de conduit virtuel représentatif de l'adresse dudit concentrateur dans ledit réseau et, d'autre part, par un identificateur de canal virtuel représentatif de l'adresse de ladite borne sur ledit concentrateur.

Selon une première variante de réalisation, ledit message pour la création et la libération des connexions virtuelles nécessaires à la création et à l'effacement des macrocellules concernées transmis par ledit processeur centralisé est diffusé à l'ensemble des concentrateurs du réseau qui en effectuent le filtrage.

Selon une seconde variante de réalisation, ledit message pour la création et la libération des connexions virtuelles nécessaires à la création et à l'effacement des macrocellules concernées est transmis par ledit processeur centralisé en point à point vers le ou les concentrateurs concernés.

Selon un second mode de réalisation de l'invention, il comporte une pluralité de processeurs prévus, par exemple dans lesdits concentrateurs, pour créer ou libérer les connexions virtuelles nécessaires à la création ou l'effacement des macrocellules concernées, lesdits processeurs pouvant être répartis.

Selon une première variante de réalisation, il est prévu pour que le message d'un processeur vers le ou les concentrateurs concernés afin de créer et de libérer les connexions virtuelles nécessaires à la création et à l'effacement des macrocellules concernées soit transmis par un canal de diffusion permanent.

Selon une seconde variante de réalisation de l'invention, il est prévu pour que le message du processeur de chaque concentrateur vers un autre concentrateur afin de créer et de libérer les connexions virtuelles nécessaires à la création et à l'effacement de macrocellules soit transmis par un conduit virtuel établi en permanence entre lesdits deux concentrateurs.

Selon une troisième variante de réalisation, il est prévu pour que le message du processeur de chaque concentrateur vers un autre concentrateur afin de créer et de libérer les connexions virtuelles nécessaires à la création et à l'effacement de macrocellules soit transmis par un conduit virtuel établi en permanence entre tous les concentrateurs Ledit conduit virtuel est avantageusement un anneau virtuel sur lequel ledit message circule de concentrateur en concentrateur.

Selon une autre variante de réalisation, ledit message est transmis autant de fois que de concentrateurs concernés par la création ou l'effacement des macrocellules, chaque concentrateur ne prenant en compte ledit message que s'il doit effectuer une opération de marquage de connexion virtuelle pour la création de la nouvelle macrocellule ou à l'effacement de l'ancienne macrocellule

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
La Fig. 1 est un schéma synoptique d'un réseau local d'accès à des mobiles du type de celui de la présente invention,
La Fig 2 est un schéma synoptique montrant l'architecture d'un réseau de distribution d'un réseau d'accès selon l'invention,
La Fig. 3 est un schéma montrant un réseau d'accès dans lequel on a défini deux macrocellules selon l'invention,
Les Figs. 4a à 4c sont des vues illustrant le glissement de macrocellules au fur et à mesure du déplacement d'un mobile,
Les Figs. 5a et 5b montre un réseau d'accès selon l'invention lors d'un glissement d'une macrocellule,
La Fig 6 est une vue illustrant la libération, le maintien et l'établissement des connexions virtuelles dans les concentrateurs concernés d'un réseau d'accès selon l'invention,
Les Figs 7a et 7b montrent des macrocellules respectivement dans le cas d'une zone géographique dense et dans le cas d'une zone géographique linéaire,
La Fig 8 illustre le glissement d'une macrocellule dans le cas d'une résurgence, et
Les Figs 9a à 9c sont des vues qui illustrent des glissements des trois macrocellules dans le cas de résurgence.

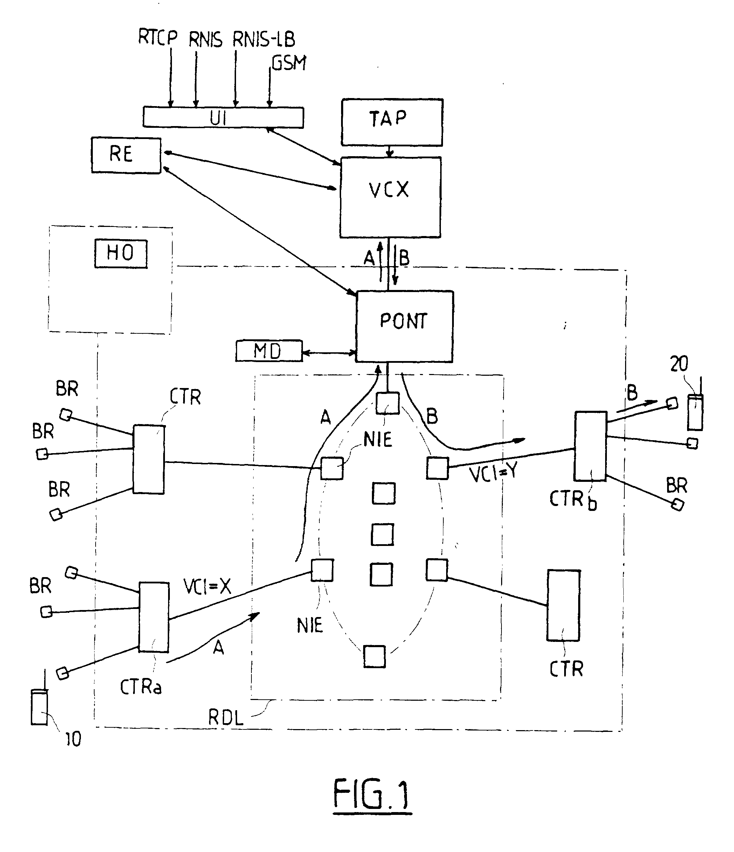

Le réseau local d'accès au mobiles RLAM représenté à la Fig. 1 est constitué d'un ensemble de concentrateurs CTR qui sont respectivement reliés, en amont, à des noeuds d'insertion/extraction NIE d'un réseau de distribution interne RDL et auxquels est connectée une pluralité de bornes radio BR.

Le réseau RLAM comporte encore un équipement d'aiguillage PONT qui est relié, d'une part, à un noeud d'insertion/extraction NIE du réseau RDL et, d'autre part, à des serveurs et à un commutateur VCX. L'équipement d'aiguillage PONT est destiné à assurer l'interface entre, d'une part, le commutateur VCX et/ou les serveurs et, d'autre part, le réseau de distribution RDL. Il est par exemple constitué d'un brasseur de conduits virtuels VP.

Le commutateur VCX est relié, par l'intermédiaire d'une unité d'interfonctionnement UI, à des réseaux externes du type RTCP, RNIS, RNIS-LB ou GSM, ou directement à d'autres réseaux externes RE du type réseaux d'accès à des mobiles RLAM identiques à celui de l'invention. Il assure, dans le plan usager, la commutation des canaux virtuels VC afin d'assurer l'établissement, d'une part, des connexions locales entre deux mobiles attachés au même réseau d'accès RLAM et, d'autre part, des connexions sortantes entre un mobile du réseau RLAM et un abonné d'un réseau externe RE ou d'un autre réseau accessible via l'unité d'interfonctionnement UI.

Sur la Fig. 1, on a schématisé avec des flèches A et B le concept de connexion entre deux mobiles 10 et 20 attachés au même réseau RLAM, ce qui évidemment n'est pas nécessairement toujours le cas. La partie de la connexion montante est marquée par la flèche A et est identifiée par un identificateur de canal virtuel VCI égal, par exemple, à X, alors que l'identificateur de canal virtuel VCI identifiant la partie descendante de la connexion, marquée par la flèche B, est égal à Y. C'est le commutateur VCX qui effectue la traduction des identificateurs de canaux VCI pour la communication.

La connexion entre les deux mobiles 10 et 20 est effectuée initialement dans le commutateur VCX et elle peut, dans le réseau RDL, évoluer consécutivement aux déplacements des mobiles.

La gestion des identificateurs de canal virtuel VCI est globale du fait qu'il n'est fait de traduction de ces identificateurs VCI que dans le commutateur VCX. Toutes les communications en cours portent donc des identificateurs de canaux virtuels VCI différents les uns des autres.

Chaque communication est bidirectionnelle. Si l'on considère la partie montante A de cette communication, elle est donc constituée d'une connexion montante et d'une connexion descendante. Ces connexions sont identifiées par le même numéro d'identificateur VCI dont la valeur est, dans notre exemple, égale à X Par contre, comme il a déjà été mentionné ci-dessus, les valeurs X et Y prises par les identificateurs de canaux virtuels VCI aux deux extrémités d'une même communication sont différentes, que celle-ci soit locale ou sortante.

Les valeurs X et Y des identificateurs VCI sont allouées par un serveur de traitement des appels locaux et externes TAP au cours de la phase d'établissement de la connexion.

Le réseau RLAM comporte encore un ensemble de serveurs directement interconnectés à l'équipement d'aiguillage PONT et accessibles, via le réseau de distribution RDL et le commutateur VCX, par des liaisons permanentes ATM de type conduit virtuel VP

Ces serveurs comprennent un opérateur de macrodiversité MD qui est utilisé pendant les phases de hand-over et un serveur de hand-over HO.

Le réseau RLAM représenté pourrait comporter d'autres serveurs qui ne sont pas décrits ici car ceux-ci ne sont pas directement liés à la présente invention.

Chaque concentrateur CTR effectue, dans le sens montant, (mobiles vers réseau) la concentration des flux en provenance des bornes radio BR auxquelles il est connecté et, dans le sens descendant, effectue le démultiplexage des flux qui arrivent du réseau RDL et qui sont destinés aux bornes BR auxquelles il est connecté. Il aiguille également chaque connexion virtuelle vers l'une ou l'autre des bornes BR sur la base de l'analyse du champ VCI des en-têtes des cellules ATM circulant dans le réseau RLAM.

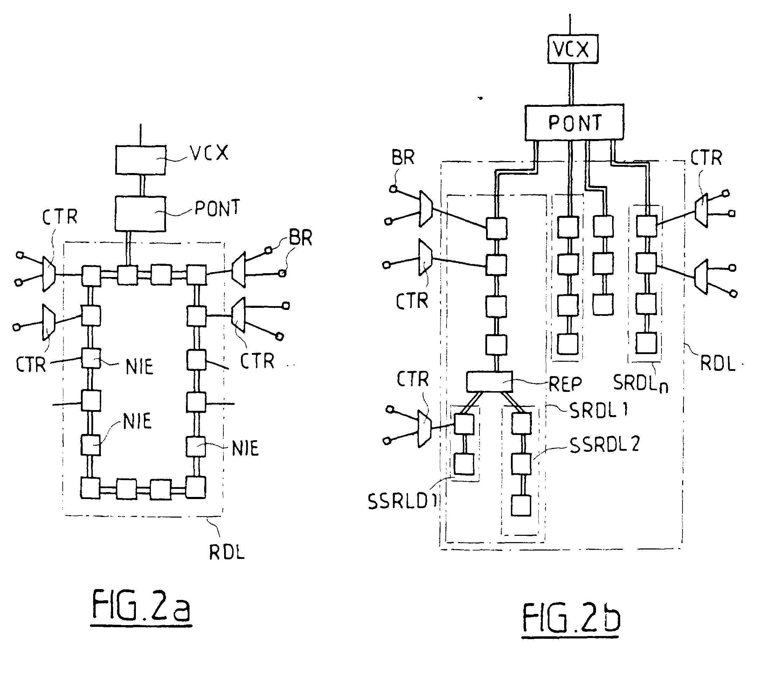

On a représenté aux Figs. 2a à 2b deux topologies différentes de réseau de distribution RDL. Ces topologies de réseau sont dites respectivement en boucle à double anneau contra-rotatif et en segment à double bus. Ces réseaux de base sont développés autour d'une même entité de base qu'est un noeud d'insertion/extraction NIE arrangé selon différentes topologies auquel est relié un concentrateur CTR.

On notera que ces réseaux de base peuvent être combinés et assemblés de diverses façons pour construire, à la demande, tout type d'architectures de réseaux de distribution, ce qui augmente leur souplesse de mise en oeuvre.

Dans la topologie de la Fig. 2a, un seul noeud d'insertion/extraction NIE est relié à l'équipement d'aiguillage PONT.

A la Fig. 2b, le réseau de distribution RDL est subdivisé en sous-réseaux SRDL1 à SRDLn respectivement reliés à l'équipement d'aiguillage PONT. Chaque sous-réseau SRDLi est constitué d'un segment de noeuds NIE auxquels sont respectivement reliés des concentrateurs CTR. Certains sous-réseaux (ici le sous-réseau SRDLI) peuvent eux aussi être subdivisés en sous-sous-réseaux SSRDLj dont les têtes sont respectivement reliées à un répéteur REP en queue d'un segment.

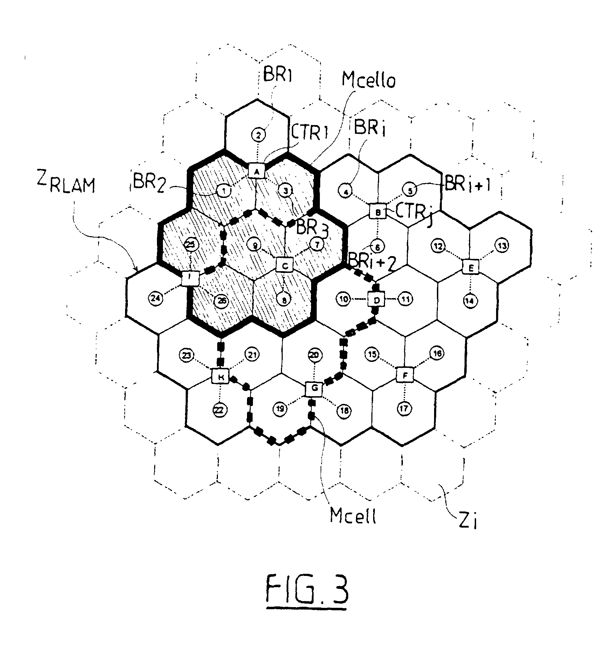

Sur la Fig 3, on a représenté, à titre d'exemple, la zone Z_{RLAM} couverte par l'ensemble de vingt six bornes BR d'un réseau RLAM. On a représenté sur cette Fig., par des hexagones, les zones géographiques Zᵢ (encore appelée dans le domaine de la technique cellule radio) respectivement couvertes par les bornes radio BRᵢ correspondant, elles-mêmes reliées à des concentrateurs CTRⱼ (avec i = 1 à n, n étant le nombre de bornes radio (ici vingt six) du réseau RLAM et avec j = 1 à m, m étant le nombre de concentrateurs (ici neuf) du réseau RLAM). On notera qu'à l'exception du concentrateur D sur lequel ne sont reliées que deux bonres 10 et 11, trois bornes sont reliées aux autres concentrateurs

Au sens où on l'entend dans la présente description, une macrocellule est un ensemble de zones géographiques ou cellules radio Zᵢ qui sont regroupées entre elles de manière à former une unique entité. On a représenté à la Fig. 3 deux macrocellules Mcell et Mcell₀ dont les limites sont respectivement matérialisées par un trait très fort et des tirets forts. La macrocellule Mcell est constituée de neuf cellules couvertes par les bornes 7, 8, 9, 26, 10, 19, 20 et 21. Quant à la macrocellule Mcell₀, Elle est constituée des sept cellules radio couvertes par les bornes 1, 3, 7, 8, 9, 25, 26

Selon l'invention, toutes les informations en provenance du réseau de distribution RDL qui sont destinées à un mobile sous le couvert d'une macrocellule MCell aboutissent non seulement à la borne BRᵢ auquel il est rattaché mais également à toutes les bornes BRᵢ couvrant la zone géographique de cette macrocellule. Ainsi, lorsque ce mobile passe d'une borne BRᵢ à une autre borne BRₖ appartenant elle-aussi à la macrocellule Mcell, les liaisons terrestres sont déjà établies Il n'y a donc pas risque d'interruption du trafic usager qui serait lié, comme dans le cas des réseaux d'accès connus, aux temps de traitement des procédures de modifications des liens supports consistant, en l'occurrence, à établir une connexion sur la nouvelle borne Brₖ et la rupture de la connexion sur l'ancienne borne Brᵢ.

Au niveau du réseau de distribution RDL, une macrocellule Mcell est définie par l'établissement d'un arbre de diffusion depuis le point d'accès matérialisé par l'équipement d'aiguillage PONT jusqu'aux extrémités que sont les bornes radio BRᵢ couvrant ladite macrocellule Mcell Un ou plusieurs arbres de diffusion sont donc bâtis sur un réseau d'accès RLAM.

Pour la définition des macrocellules, on divise en zones de plusieurs cellules radio l'ensemble formé de toutes les cellules radio couvertes par un réseau local RLAM donné. Un réseau d'accès RLAM peut donc représenter une seule ou plusieurs macrocellules fixes. Le choix du nombre de macrocellules supportées par un réseau dépend de sa taille en termes de nombre de bornes radio BR et/ou de la densité de trafic attendu.

On notera que c'est seulement lorsque le mobile passe d'une macrocellule Mcell fixe à sa voisine, qu'il sera nécessaire de définir les nouveaux liens supports, c'est-à-dire ceux qui se rapportent à la nouvelle macrocellule et à supprimer les anciens liens, c'est-à-dire ceux qui se rapportent à l'ancienne macrocellule. Dans ce cas précis, la qualité d'une communication peut donc être affectée pendant le passage entre deux macrocellules fixes

Selon une variante de réalisation de l'invention, on crée en permanence autour d'un mobile en communication une macrocellule constituée de plusieurs cellules radio Une macrocellule suit ainsi constamment ce mobile. Chaque modification de rattachement du mobile d'une borne, dite ancienne, vers une nouvelle borne, dite borne d'accueil, a pour conséquence la création d'une nouvelle macrocellule autour de la borne d'accueil par marquage vers des bornes supplémentaires et l'effacement de l'ancienne macrocellule par libération d'autres bornes. Or, la nouvelle borne appartient à la fois à l'ancienne et la nouvelle macrocellules, si bien qu'il n'y a pas coupure de la communication lors de cette modification. L'avantage qui résulte de cette façon de procéder est de pouvoir différer le traitement de création et d'effacement de macrocellules concernées sans perturber la communication du mobile.

On notera que dans la suite de la description, le terme "création de macrocellule" s'applique non seulement à la création de la macrocellule initiale, c'est-à-dire la macrocellule qui est formée au moment de la procédure d'établissement de la communication, mais également à la création des autres macrocellules subséquentes suite au déplacement du mobile. L'effacement d'une macrocellule est l'opération qui consiste à la libération des bornes qui couvre ladite macrocellule Les opérations de création et d'effacement de macrocellules sont réalisées par marquage et effacement de connexions ATM dans les concentrateurs auxquels sont reliées les bornes concernées.

Par abus de langage, on appellera "glissement d'une macrocellule" le processus qui conduit, partant d'une macrocellule dite ancienne, à l'effacement de la macrocellule ancienne et à la création d'une nouvelle macrocellule.

Comme on le verra par la suite, le processus de glissement d'une macrocellule consiste à établir les connexions virtuelles des bornes qui couvrent la nouvelle macrocellule et qui ne couvraient pas déjà l'ancienne macrocellule et à libérer les connexions virtuelles des bornes qui couvraient l'ancienne macrocellule et qui ne couvrent pas la nouvelle borne.

La borne autour de laquelle est crée une macrocellule est dite, dans la suite de la description, la borne noyau

On a représenté à la Fig. 4a, dans la même zone Z_{RLAM} que celle de la Fig 3, une macrocellule Mcell₀ régulière constituée de sept cellules radio formées par les bornes BR portant respectivement les numéros 1, 3, 7, 8, 9, 25 et 26 La borne 9 est la borne noyau. Le mobile Mobile est au départ lié à la borne numéro 9. C'est au cours de la phase d'établissement de l'appel que le réseau RDL crée les connexions virtuelles nécessaires à la mise en place de la macrocellule Mcell₀ vers l'ensemble des bornes BR dont les cellules radio sont adjacentes à celle où se trouve alors le mobile. Pendant la communication et tant que le mobile Mobile est rattaché à la borne 9, tout le trafic visant le mobile Mobile est aiguillé dans le réseau RDL jusqu'aux sept bornes qui constituent la macrocellule Mcell₀. Le trafic émis par le mobile est quant à lui acheminé dans le réseau RDL quelle que soit la borne BR de la macrocellule à partir de laquelle il a été émis.

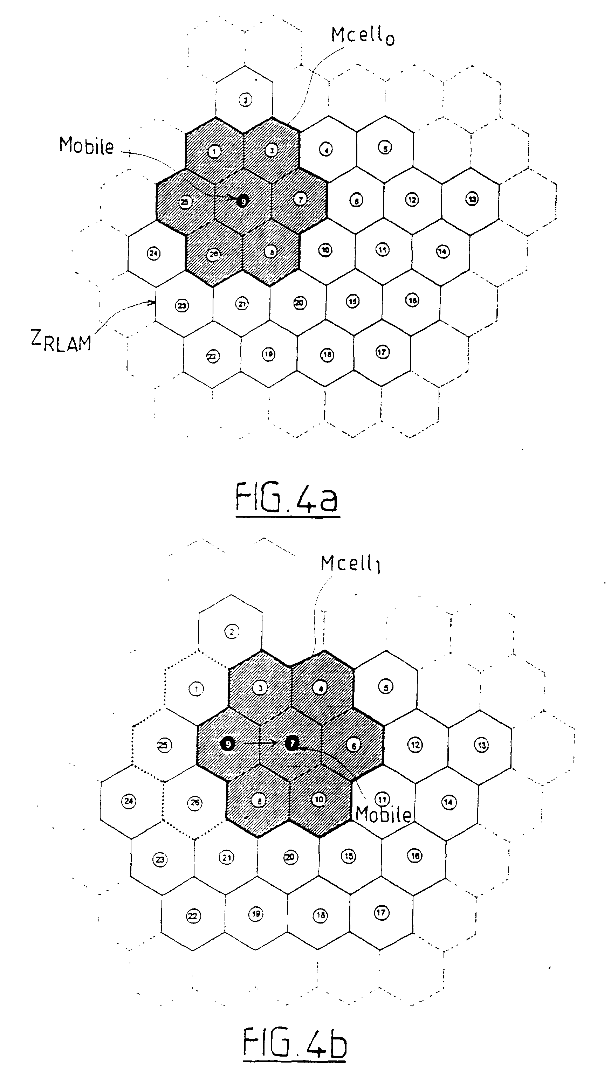

Sur la Fig. 4b, le mobile Mobile s'est déplacé vers la borne 7 et la macrocellule Mcell₀ a glissé vers la droite pour devenir la macrocellule Mcell₁ constituée également de sept cellules radio formées par les bornes Br portant respectivement les numéros 3, 4, 6, 7, 8, 9 et 10 La borne 7 est la nouvelle borne noyau. Le transfert du mobile de la borne 9 vers la borne 7 définit une phase de hand-over au cours de laquelle un dialogue s'instaure entre le mobile, les bornes et le réseau de distribution RDL Cet échange a pour objet d'ordonner au réseau RDL le marquage de la nouvelle macrocellule Mcell₁ à partir d'informations que le mobile peut être conduit à aller chercher sur la borne 9 qu'il vient de quitter. Ce marquage de la cellule Mcell₁ consiste à marquer les concentrateurs concernés afin de libérer les bornes 1, 25 et 26 et établir les liens vers les bornes 4, 6 et 10 Les informations nécessaires à ce marquage sont notamment l'identité de la connexion, c'est-à-dire ses identificateurs de conduits virtuels VPI et de canaux virtuels VCI de signalisation et de trafic usager, et des paramètres spécifiques de la communication, tels que le débit requis pour la communication, la qualité de service, etc.

On notera que, pendant les phases de hand-over, au moins les deux bornes (ici les bornes 7 et 9) capables de recevoir les signaux de trafic émis par le mobile peuvent émettre un flux usager en direction du réseau RDL qui est pertinent. Un processus, dit de macrodiversité, permet de sélectionner le meilleur flux d'informations parmi ces flux. Ce processus de macrodiversité ne fait pas l'objet de la présente description

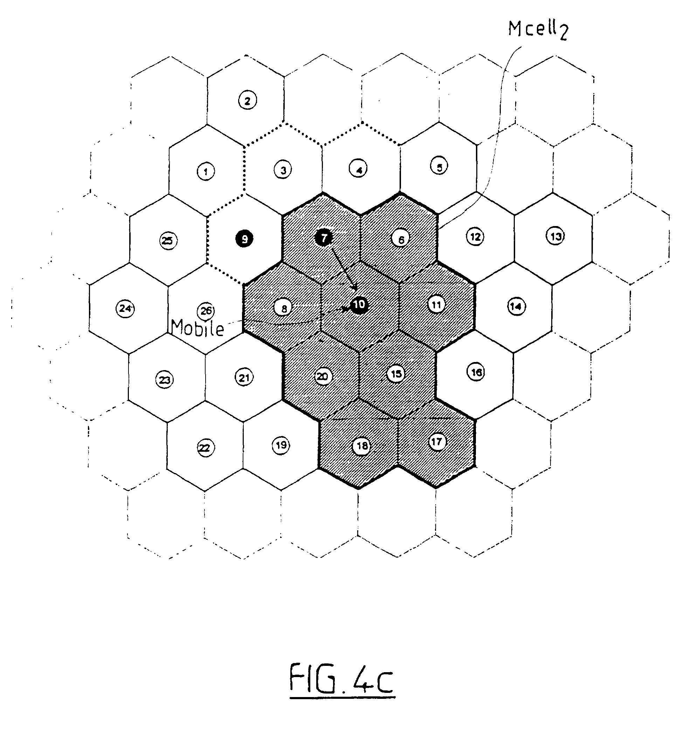

Sur la Fig 4c, le mobile s'est maintenant déplacé vers la borne 10 La macrocellule Mcell₁ suit ce déplacement et est devenue la macrocellule Mcell₂ constituée cette fois de neuf cellules radio formées par les bornes BR portant respectivement les numéros 6, 7, 8, 9, 10, 11, 15, 17, 18 et 20. Les connexions virtuelles des bornes 3, 4 et 9 ont été libérées alors que celles des bornes 11, 15, 17, 18 et 20 ont été établies.

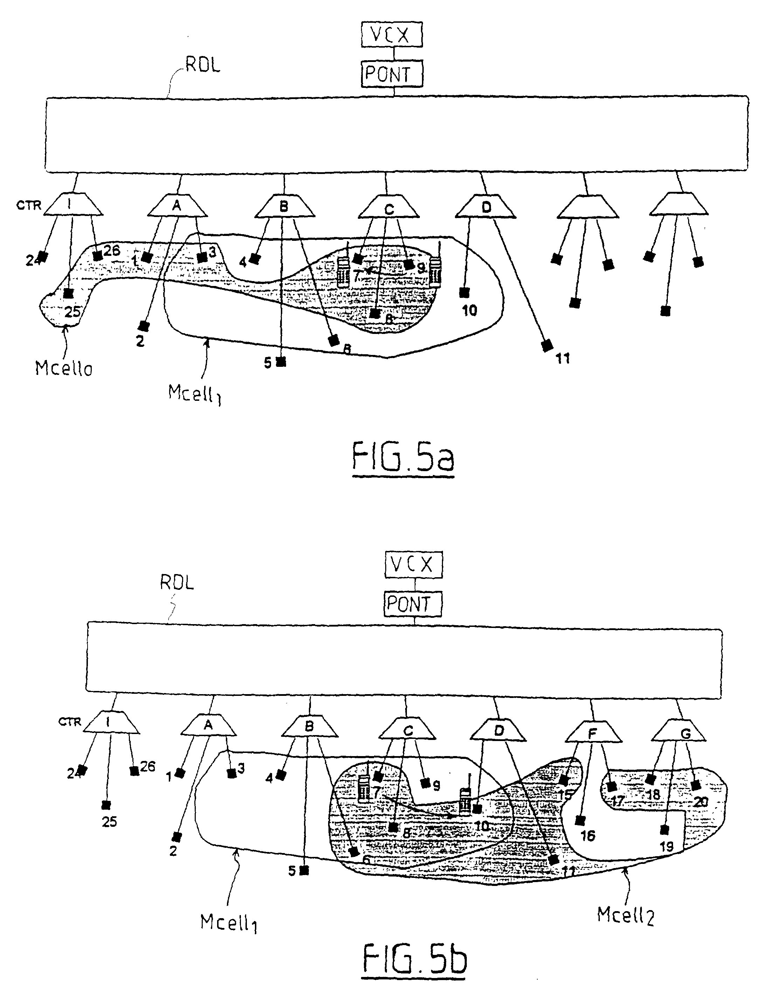

Aux Figs. Sa et 5b, on a schématisé le réseau RLAM avec l'équipement d'aiguillage PONT, le commutateur VCX, le réseau de distribution RDL, les concentrateurs CTR et des bornes BR. On a mis en évidence, à la Fig. Sa, les macrocellules Mcell₀ et Mcell₁ et, à la Fig 5b, les macrocellules Mcell₁ et Mcell₂ afin de pouvoir visualiser les bornes concernées par les glissements de macrocellules ainsi que les libérations et les marquages effectués lors de ces glissements.

On notera que, dans l'exemple mentionné ci-dessus, les macrocellules Mcell₁ et Mcell₂ ont des silhouettes différentes Ainsi, selon une caractéristique de l'invention, une macrocellule peut se déformer en glissant. Elle peut par exemple être régulière d'une taille de sept ou dix neuf cellules radio sur une zone géographique dense, par exemple une zone urbaine et passer à une taille de trois ou deux cellules radio "en ligne" au passage vers un accès routier si on considère que toute la zone géographique appartient au même RLAM.

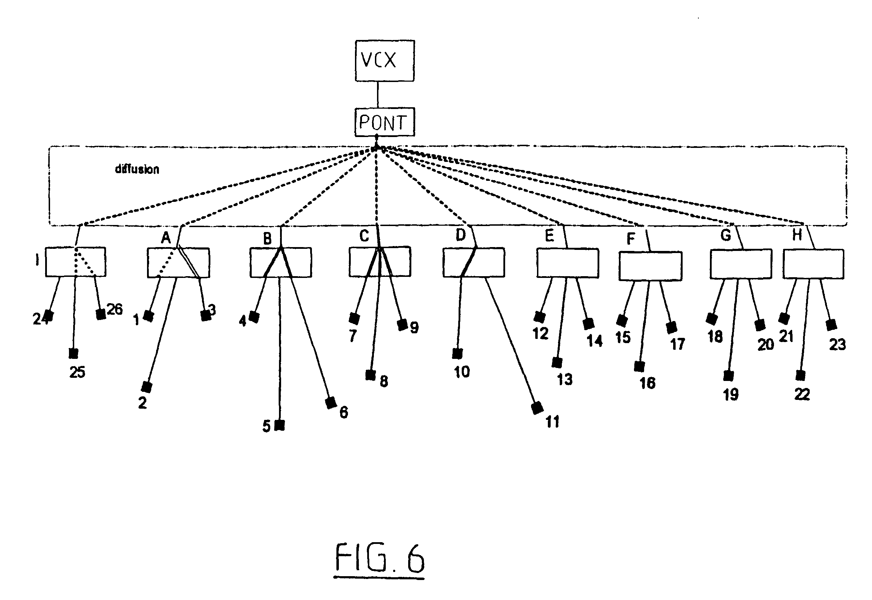

A la Fig 6, on a illustré la libération, le maintien et l'établissement des connexions nécessaires à l'effacement et à la création respectivement des macrocellules Mcell₀ et Mcell₁ des Fig. 4a et 4b. On a représenté, dans les concentrateurs concernés, par des pointillés arrondis, les connexions à libérer vers les bornes de l'ancienne macrocellule Mcell₀, par des tirets doubles, les connexions maintenues et, par des tirets simples forts, les connexions à établir vers la nouvelle macrocellule Mcell₁.

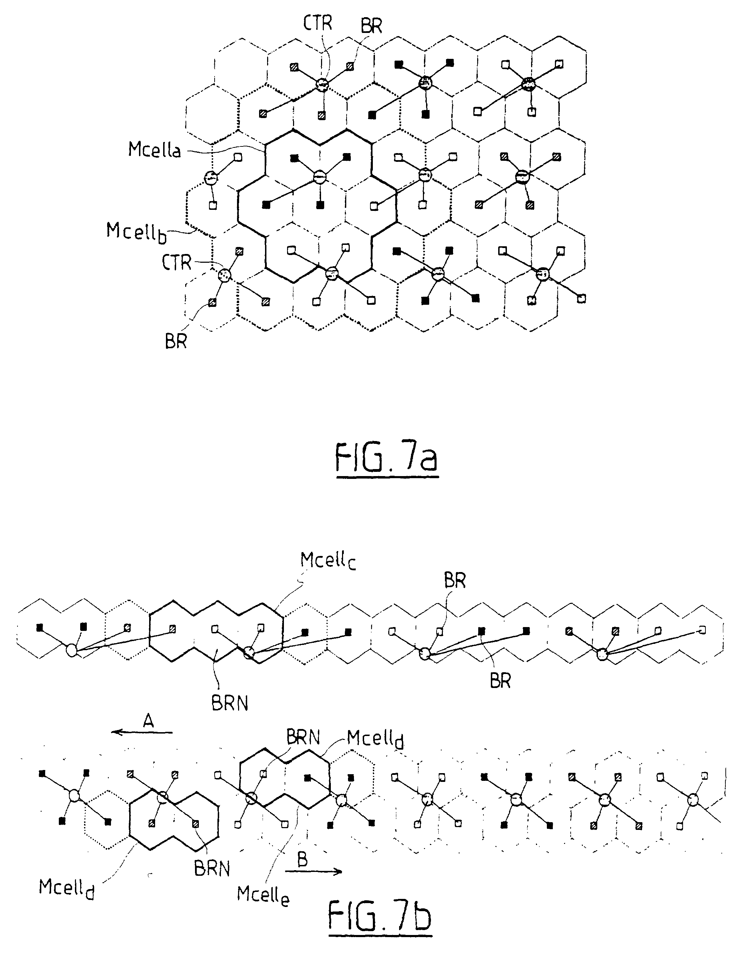

Aux Figs 7a, 7b, et 7c, on a représenté une zone couverte par des bornes BR reliées, par quatre, à des concentrateurs CTR Sur ces Figs., les bornes sont représentées par des carrés alors que les concentrateurs le sont pas des disques.

A la Fig 7a, on a montré deux exemples de macrocellules régulières: l'une est la macrocellule Mcellₐ de taille régulière de sept cellules (limites en traits forts) et l'autre est la macrocellule Mcell_{b} de dix neuf cellules (limites en pontillés) dans une zone étendue. Une telle macrocellule Mcell_{b} est appropriée pour des zones géographiques denses.

A la Fig 7b, on a schématisé une macrocellule Mcell_{c} de trois cellules dans une zone linéaire La borne, dite borne noyau BR_{N}, à laquelle est normalement rattaché le mobile est au centre de la macrocellule Mcell_{c}. Dans cette configuration, la direction de glissement est imposée par celle des cellules radio mais pas le sens. le mobile peut se déplacer dans un sens ou dans l'autre.

A la Fig. 7c, on a schématisé une macrocellule Mcell_{d} de deux cellules dans une zone linéaire. La borne noyau BR_{N} à laquelle est normalement rattaché le mobile est à l'arrière de la macrocellule Mcell_{d} par rapport au sens de déplacement du mobile (voir flèche A) qui est là imposé. On a également schématisé une macrocellule Mcellₑ de deux cellules dont la borne noyau BR_{N} est également située à l'arrière de la macrocellule par rapport au sens de déplacement du mobile (voir flèche B).

Pour que le réseau RLAM puisse assurer les processus de création et d'effacement des macrocellules, il est nécessaire que ces dernières soient décrites et enregistrées dans une table centralisée, par exemple au niveau de l'équipement d'aiguillage PONT du réseau RLAM. Chaque macrocellule est ainsi décrite en relation avec sa borne noyau. A l'initialisation du réseau, chaque concentrateur CTR reçoit la description des macrocellules Mcell qui concernent les bornes BR qu'il connecte.

La table de définition des macrocellules recense, pour chaque borne du réseau RLAM, la liste de ses voisines dont les cellules radio forment entre elles une macrocellule. Cette borne est la borne noyau de la macrocellule.

Cette description des macrocellules peut être modifiée par l'opérateur administrant le réseau en fonction de l'évolution de l'architecture physique du réseau RLAM due, par exemple à une extension, des modifications, etc., voire en fonction de considérations liées aux transmissions radio.

A titre d'exemple, la table suivante regroupe, pour chacune des trois bornes 9, 7, 8 attachées au concentrateur CTR marqué C à la Fig. 3, la liste des bornes voisines formant entre elles les macrocellules Mcell₀, Mcell₁ et Mcell, lesdites trois bornes 9, 7 et 8 étant les bornes noyau desdites macrocellules Mcell₀, Mcell₁ et Mcell.

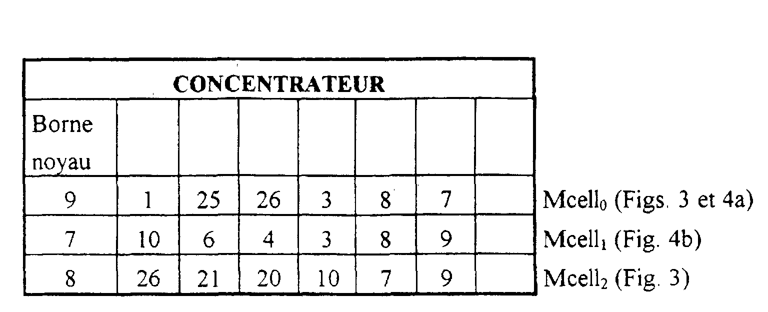

Dans cette table, les bornes sont identifiées par un numéro mais on comprendra qu'elle pourraient l'être par les identificateurs virtuels (VPI et VCI en ATM) qui permettent de les atteindre.

On notera également que le nombre des bornes voisines n'est pas nécessairement le même pour chaque borne noyau. Ceci illustre le fait que les macrocellules Mcell peuvent être de tailles différentes

On notera que la Fig 3 représente schématiquement une zone géographique couverte par un réseau comprenant neuf concentrateurs CTR auxquels sont rattachées vingt six bornes BR. Pour des raisons d'ingénierie, les concentrateurs CTR rattachent les bornes BR les plus proches. Mais, on précise cependant que la technique de macrocellules glissantes décrite ici est indépendante de cette condition. En d'autres termes, la notion de macrocellule telle qu'elle est décrite ici ne dépend ni de la proximité géographique entre les bornes BR et leur concentrateur CTR de rattachement, ni du nombre de bornes BR rattachées à un même concentrateur CTR. En effet, une macrocellule Mcell est définie par des liens virtuels et non pas par des liens physiques.

Comme on peut le constater, la technique des macrocellules telle qu'elle vient d'être exposée permet d'anticiper les déplacements d'un mobile en établissant à l'avance les connexions ATM vers les bornes dont les zones de couverture sont adjacentes à celle de la borne sur laquelle il est connecté En arrivée, tout le trafic destiné au mobile parvient à toutes les bornes de son environnement géographique. Le mobile, tout en se déplaçant, reçoit donc sans délais ses informations usager. En départ, les informations qu'il émet seront également transmises immédiatement vers le réseau.

Les opérations de création et d'effacement de macrocellules sont réalisées sans contrainte de délai et peuvent être différées si, au moment de leurs commandes, les ressources du réseau nécessaires à leur exécution, ne sont pas disponibles. Ce retard d'exécution n'entraînera pas de perturbations dans le trafic usager.

Ces opérations de création et d'effacement de macrocellules lors du glissement consistent à libérer les connexions des bornes de l'ancienne macrocellule qui ne couvrent pas la nouvelle macrocellule et à établir les connexions vers les bornes qui sont présentes dans la nouvelle macrocellule. Elles peuvent également consister à libérer les connexions des bornes de l'ancienne macrocellule qui ne couvrent pas la nouvelle macrocellule et à établir les connexions des seules bornes qui sont présentes dans la nouvelle macrocellule mais pas dans l'ancienne macrocellule.

On notera que le recouvrement entre la nouvelle macrocellule et l'ancienne macrocellule est constitué d'un nombre très variable de cellules radio élémentaires incluant normalement celle de la borne d'accueil. Ce nombre dépend à la fois du sens de déplacement du mobile, des profils des macrocellules, du fait que le mobile est en limite du réseau RLAM, etc.

Ces opérations de création et d'effacement de macrocellules lors d'un glissement peuvent être menées de manière centralisée, c'est-à-dire à partir d'un processeur centralisé agissant pour le compte de l'ensemble du réseau RLAM, ou de manière distribuée, c'est-à-dire à partir de processeurs répartis dans certains organes du réseau, comme les concentrateurs.

Ces opérations nécessitent la connaissance par le ou les processeurs qui les exécutent de différents paramètres mais également que des canaux pouvant supporter les différents messages de signalisation soient établis dans le réseau ATM.

Les informations nécessaires sont, outre des paramètres radio non abordées dans la présente description, les informations liées à la communication dans le réseau de distribution RDL Il s'agit du ou des identificateurs de canaux et conduits virtuels VCI/VPI affectés à la connexion concernée ainsi que de l'image de l'ancienne macrocellule

On notera que l'identificateur de canaux virtuel VCI va fournir l'identité de la connexion à créer sur la nouvelle macrocellule. Quant à l'image de l'ancienne macrocellule, elle va permettre à la borne d'accueil de savoir quelles sont les bornes à connecter et quelles sont les bornes à effacer.

Selon l'approche d'un traitement centralisé, la borne d'accueil sur laquelle le mobile vient de se rattacher suite à son déplacement à partir de la borne ancienne, adresse à un processeur centralisé, avantageusement relié directement à l'équipement d'aiguillage PONT, une requête de création et d'effacement de macrocellules sous la forme d'un message qui contient notamment l'ensemble des identificateurs de canaux et conduits virtuels VCI et VPI qui sont propres à la communication en cours et qui sont donc associés aux canaux supportant le trafic usager mais également au canal supportant la signalisation.

Ce message est d'abord émis vers le concentrateur CTR auquel est rattachée la borne d'accueil en point à point sur un canal établi en permanence et identifié, au niveau de la borne considérée, par un unique couple d'identificateurs de conduits et de canaux virtuels VPI/VCI (par exemple égal à V/n) Le processeur du PONT est ainsi vu par toutes les bornes avec ce même couple d'identificateurs (VPI/VCI = V/n). Il est ensuite émis vers l'équipement d'aiguillage PONT après traduction, au niveau du concentrateur CTR auquel est rattachée la borne d'accueil, du couple d'identificateurs VPI/VCI qui devient égal à Z/q, dans lesquels l'identificateur de conduits virtuels VPI = Z identifie l'adresse, dans le réseau de distribution RDL, du concentrateur CTR auquel est rattachée la borne d'accueil et l'identificateur de canaux virtuels VCI = q identifie la borne d'accueil. Ainsi, le processeur du PONT peut identifier sans ambiguïté la borne à l'origine de la requête.

L'équipement d'aiguillage PONT acquitte la requête ainsi reçue et la traite. Pour ce faire, il procède à la consultation de la table répertoriant les bornes associées à la macrocellule dont la borne noyau est la borne d'accueil ayant émis la requête reçue et en déduit les identités des concentrateurs dans lesquels il faut créer les connexions virtuelles correspondant à la nouvelle macrocellule. Par ailleurs, au moyen des identificateurs VPI/VCI propres à la communication en cours, il peut déterminer les bornes associées à l'ancienne macrocellule et en déduire les identités des concentrateurs dans lesquels il faut libérer les connexions virtuelles.

L'équipement d'aiguillage PONT transmet alors aux concentrateurs concernés un message dans lequel il est précisé les liens que ceux-ci devront créer ou libérer. Ce message peut être diffusé à tous les concentrateurs du réseau et, dans ce cas, il contient les identités des concentrateurs visés et les caractéristiques de la connexion à créer. Il peut également être adressé en point à point vers le ou les concentrateurs concernés.

Le principal inconvénient de ce processus centralisé de création et d'effacement de macrocellules est de concentrer tout le trafic de création vers une seule unité de traitement, en l'occurrence le processeur de l'équipement d'aiguillage PONT.

Selon l'approche d'un traitement distribué, les processus de création et d'effacement de macrocellules sont effectués par des processeurs qui sont répartis dans le réseau de distribution RDL, avantageusement dans chacun des concentrateurs CTR du réseau de distribution RDL

Pour que la borne d'accueil puisse recueillir les informations nécessaires à leurs mises en oeuvre, notamment les informations propres à la communication en cours et l'image de l'ancienne macrocellule, une procédure de dialogue est établi directement entre les concentrateurs auxquels sont respectivement reliées l'ancienne borne et la borne d'accueil.

La borne d'accueil adresse ensuite au concentrateur auquel elle est reliée un message sollicitant la création de la macrocellule dont elle est la borne noyau et l'effacement de l'ancienne macrocellule Ce message contient notamment la table qui répertorie les bornes appartenant à la nouvelle macrocellule et celle qui répertorie les bornes de l'ancienne macrocellule. Une fois ce message reçu, le concentrateur peut en déduire les identités des concentrateurs concernés par la création de la nouvelle macrocellule et ceux qui sont concernés par l'effacement de l'ancienne macrocellule

Le concentrateur adresse alors aux concentrateurs soit une requête de création de la nouvelle macrocellule soit d'effacement de l'ancienne macrocellule. Pour la transmission de cette requête aux concentrateurs concernés, différentes solutions sont envisageables

Selon une première solution, un canal de diffusion permanent est établi à partir de l'équipement d'aiguillage PONT. La requête émanant du concentrateur auquel est reliée la borne d'accueil est diffusée sur l'ensemble du réseau par un conduit virtuel dédié, le PONT n'assurant ici que l'aiguillage des conduits virtuels. Tous les processeurs des concentrateurs du réseau reçoivent donc la requête mais seuls ceux qui se reconnaissent destinataires effectuent le marquage demandé pour l'établissement ou la libération des connexions virtuelles concernés par la création de la nouvelle macrocellule ou l'effacement de l'ancienne macrocellule. On précise que le message émis par le concentrateur auquel est rattachée la borne d'accueil contient l'ensemble des caractéristiques de la connexion impliquée dans la macrocellule. Sur la base de cette requête, les concentrateurs concernés effectuent les connexions ou libérations demandées.

Selon une variante de réalisation, on établit un maillage complet de conduits virtuels permanents entre tous les couples possibles de concentrateurs Le concentrateur auquel est rattachée la borne d'accueil s'adresse à chacun des concentrateurs visés par la création ou l'effacement des macrocellules en point à point et ce par le conduit virtuel correspondant. Ainsi, seuls les concentrateurs concernés sont sollicités

Cette solution présente l'avantage de ne solliciter que les concentrateurs concernés contrairement à la solution précédente où tous les concentrateurs du réseau sont activés pour toutes les macrocellules à créer ou à effacer

Cette seconde solution présente néanmoins l'inconvénient de générer un flux de messages relativement important. En effet, six messages sont par exemple nécessaires pour la création d'une macrocellule régulière de taille sept dont chaque borne dépend d'un concentrateur différent.

Une autre variante de réalisation consiste à prévoir la transmission, par le concentrateur auquel est rattachée la borne d'accueil, d'un seul message en utilisant un canal virtuel commun dédié établi en permanence entre tous les concentrateurs. Ce canal virtuel est par exemple une boucle virtuelle circulant de concentrateur en concentrateur. Comme dans le premier mode de réalisation, tous les processeurs du réseau reçoivent la requête mais seuls ceux qui se reconnaissent destinataires effectuent le marquage demandé.

Une dernière solution similaire à la précédente consiste à prévoir un canal commun dédié en anneau virtuel et à émettre sur ce canal autant de messages que de concentrateurs concernés par la création de la nouvelle macrocellule ou l'effacement de l'ancienne macrocellule. Dans ce cas, le filtrage du message est effectué au niveau ATM, les concentrateurs ne laissant passer la requête vers leur processeur que si une opération de marquage de connexion virtuelle est nécessaire à l'établissement de la nouvelle macrocellule ou à l'effacement de l'ancienne macrocellule

La création de macrocellules telle qu'elle vient d'être décrite est fondée sur des hypothèses de couvertures géographiques des bornes et de proximité géographique des bornes. Or, il peut se produire qu'un mobile se raccroche subitement à une borne radio qui ne se trouve pas dans la zone couverte par la macrocellule dans laquelle il a jusqu'ici évolué. Cette situation se présente par exemple lorsqu'il y a résurgence d'une cellule radio au milieu d'une cellule radio qui n'est pas sa voisine

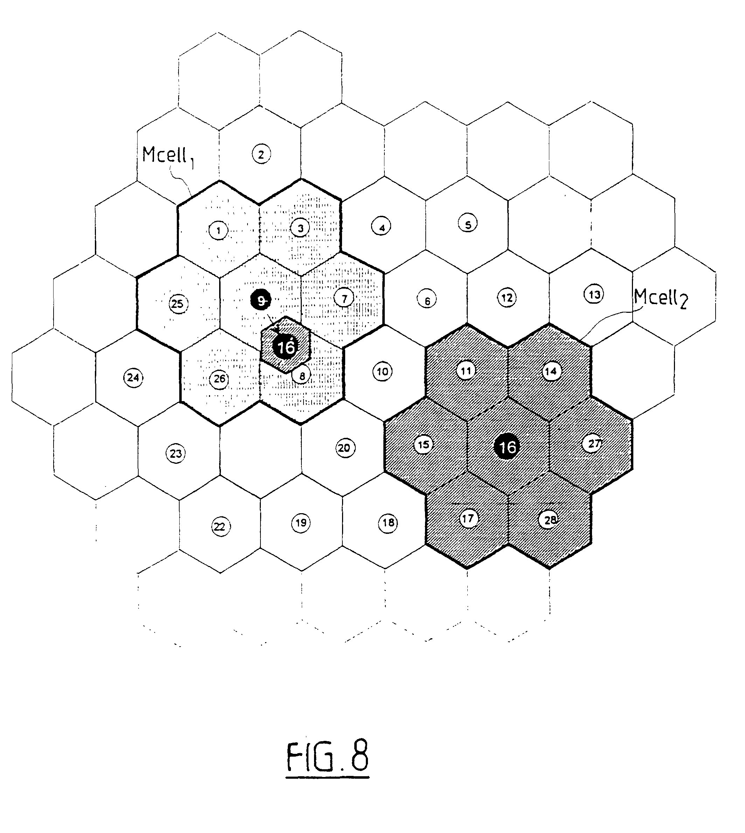

On a illustré ce phénomène à la Fig. 8. Le mobile qui se trouve, à l'intérieur de la macrocellule Mcell₁, rattaché à la borne couvrant la cellule radio 9 se trouve brutalement en liaison radio avec la résurgence 16' de la cellule 16 qui, elle, n'appartient pas à la zone couverte par la macrocellule Mcell₁ (cellules radio 1, 3, 25, 7, 26, 9 et 8) Le mobile n'est donc plus connecté par le réseau ni en émission ni en réception

Bien qu'en temps normal, le marquage de la borne d'accueil est inutile puisque précisément la borne d'accueil couvre une zone qui appartient à la macrocellule de départ, ce phénomène de résurgence amène à effectuer un marquage systématique sur la nouvelle borne d'accueil en plus des marquages qui sont normalement effectués pour la création de la nouvelle macrocellule.

En conséquence, dans notre exemple, le mobile commande à la borne couvrant la cellule 16 la création d'une macrocellule Mcell₂ dont la cellule noyau est la cellule 16 et dont les cellules radio sont, dans l'exemple représenté, les cellules portant les numéros 16, 11, 14, 15, 17, 27 et 28. La création de la macrocellule Mcell₂ a pour objet de marquer la connexion sur la borne 16 permettant ainsi au mobile d'être de nouveau en communication.

Normalement, la procédure à dérouler consiste à marquer sept nouvelles connexions respectivement vers les bornes 16, 11, 14, 15, 17, 27, 28 et à effacer sept autres connexions vers les bornes 9, 1, 3, 25, 7, 26, 8.

On notera que le temps pour la création de la macrocellule Mcell₁ et l'effacement de la macrocellule Mcell₁ a pu être relativement long pouvant entraîner un long temps de coupure de la communication.

Cependant, le phénomène de résurgence peut se réduire à un phénomène transitoire qu'il serait souhaitable de pouvoir absorber. Pour résoudre ce problème, on propose de maintenir, pendant un laps de temps prédéterminé, les marquages des cellules de l'ancienne macrocellule Mcell₁.

Pour comprendre la mise en oeuvre de cette caractéristique, on propose de se reporter aux Figs. 4a à 4b. On peut constater que la comparaison entre la macrocellule Mcell₀ et la macrocellule Mcell₁ donne l'adresse des trois cellules à créer, ici les cellules 10, 6, 4, et des trois cellules à effacer, ici les cellules 9, 3, 8. On propose donc de n'effectuer l'effacement des cellules anciennes 9, 3, 8 qu'un certain temps après avoir crée les marquages des cellules nouvelles 10, 6, 4. Ainsi, pendant ce laps de temps, la macrocellule en vigueur sera en réalité constituée de l'ensemble des cellules constituant l'ancienne et la nouvelle macrocellules Mcell₀ et Mcell₁, c'est-à-dire les cellules 1, 3, 4, 6, 7, 8, 9, 10, 25, 26. On comprendra que cette technique engendre un glissement qui n'est plus un simple décalage comme c'est le cas lorsque la création de la nouvelle macrocellule et l'effacement de l'ancienne sont simultanés.

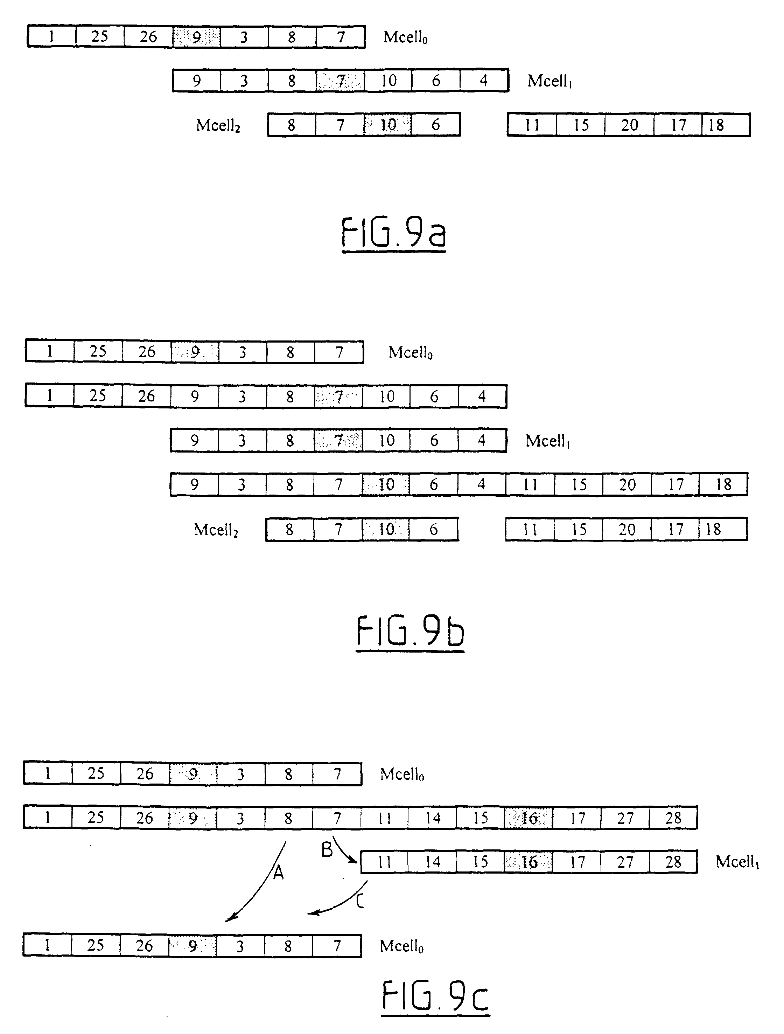

On a illustré à la Fig. 9a, le cas d'un glissement par simple décalage sur les trois macrocellules Mcell₀, Mcell₁ et Mcell₂ décrites précédemment en relation avec les Figs 4a à 4c et, à la Fig 9b, le cas d'un glissement avec maintien sur les trois mêmes cellules.

Si on considère le cas de la résurgence illustré à la Fig. 8, le processus, illustré à la Fig 9c, est le suivant Le mobile passant dans la résurgence 16' de la borne 16 provoque la création de la Mcell₁. Pendant un laps de temps prédéterminé, les deux macrocellules Mcell₀ et Mcell₁ sont simultanément marquées.

Si le mobile revient avant l'échéance de ce laps de temps sous la couverture de la macrocellule Mcell₀ initiale (flèche A), celle-ci n'a pas été effacée et le passage sous la couverture des bornes 1, 25, 26, 9, 3, 8, 7 se fera sans dégradation de la communication

Par contre, s'il ne revient pas rapidement sous la macrocellule Mcell₀ initiale (flèche B), celle-ci est effacée parce qu'on considère que le mobile ne reviendra plus sous cette macrocellule. Si c'était quand même le cas (flèche C), on se retrouverait dans la situation normale d'une résurgence avec les inconvénients qui en résultent

## Revendications

1. Procédé d'établissement des connexions virtuelles d'un réseau de distribution d'un réseau local d'accès à des mobiles du type comportant une pluralité de bornes radio (BR) reliées, par l'intermédiaire de concentrateurs (CTR), audit réseau de distribution (RDL), chaque borne radio (BR) couvrant une cellule radio à l'intérieur de laquelle elle peut être en communication avec un mobile, chaque concentrateur (CTR) étant prévu pour assurer la connexion virtuelle d'au moins une borne (BR) avec ledit réseau de distribution (RDL), ledit réseau comportant des moyens pour établir les connexions virtuelles vers la borne (BR) sous la couverture de laquelle se trouve un mobile ainsi que vers des bornes (BR) voisines de ladite borne (BR), caractérisé en ce qu'il consiste à :
préalablement associer à chaque borne (BR) dudit réseau d'accès au moins une borne voisine (BR) de manière à couvrir une macrocellule, et
à l'arrivée d'un mobile sous la couverture d'une borne, dite borne d'accueil, émettre, à destination d'au moins un processeur, une requête identifiant ladite borne d'accueil et la communication correspondante,
déterminer, à partir de l'identification de ladite borne d'accueil, les bornes associées à ladite borne d'accueil et, à partir de l'identification de la communication, les bornes associées à la borne sous la couverture de laquelle se trouvait auparavant ledit mobile,
en déduire les bornes vers lesquelles les connexions doivent être établies et les bornes vers lesquelles les connexions doivent être libérées, et
transmettre aux concentrateurs auxquels lesdites bornes sont reliées un message pour commander lesdits concentrateurs afin qu'ils puissent créer ou libérer les liens correspondants.

2. Procédé selon la revendication 1, caractérisé en ce que la libération des connexions virtuelles vers les bornes qui sont associées à l'ancienne borne et qui ne sont pas associées à ladite borne d'accueil est retardée d'une durée prédéterminée.

3. Procédé selon la revendication 2 ou 3, caractérisé en ce que ladite requête contient les identificateurs de canaux et conduits virtuels affectés à la communication.

4. Procédé selon une des revendications précédentes, caractérisé en ce que ladite requête est transmise au concentrateur (CTR) auquel est reliée ladite borne d'accueil par un canal établi en permanence et identifié, au niveau de ladite borne d'accueil, par un unique couple d'identificateurs de conduits et canaux virtuels, ladite requête étant ensuite émise dudit concentrateur audit ou à chaque processeur sur un canal identifié, d'une part, par un identificateur de conduit virtuel représentatif de l'adresse dudit concentrateur dans ledit réseau et, d'autre part, par un identificateur de canal virtuel représentatif de l'adresse de ladite borne sur ledit concentrateur.

5. Procédé selon la revendication 4, caractérisé en ce que ledit message pour la création et la libération des connexions virtuelles nécessaires à la création et à la libération des liens concernés transmis par ledit ou chaque processeur est diffusé à l'ensemble des concentrateurs du réseau qui en effectuent alors le filtrage.

6. Procédé selon la revendication 4, caractérisé en ce qu'il consiste à prévoir un processeur pour chaque concentrateur, un message du processeur d'un concentrateur étant transmis à chaque concentrateur concerné pour la création et la libération desdits liens par un conduit virtuel établi en permanence entre chaque paire de concentrateurs.

7. Procédé selon la revendication 4, caractérisé en ce qu'il consiste à prévoir un processeur pour chaque concentrateur, un message du processeur d'un concentrateur qui a reçu ladite requête étant transmis à chaque concentrateur concerné pour la création et la libération des liens par un conduit virtuel établi en permanence entre tous les concentrateurs.

8. Procédé selon la revendication 7, caractérisé en ce que chaque conduit virtuel établi en permanence entre tous les concentrateurs est un anneau virtuel sur lequel un message peut circuler de concentrateur à concentrateur.

9. Procédé selon la revendication 7, caractérisé en ce qu'un message est transmis autant de fois que de concentrateurs concernés par la création ou la libération desdits liens, chaque concentrateur ne prenant en compte ledit message que s'il doit effectuer une opération de marquage de connexion virtuelle pour la création ou la libération desdits liens.

10. Réseau local d'accès à des mobiles du type comportant une pluralité de bornes radio (BR) reliées, par l'intermédiaire de concentrateurs (CTR), à un réseau de distribution (RDL), chaque borne radio (BR) couvrant une cellule radio à l'intérieur de laquelle elle peut être en communication avec un mobile, chaque concentrateur (CTR) étant prévu pour assurer la connexion virtuelle d'au moins une borne (BR) avec ledit réseau de distribution (RDL), ledit réseau comportant des moyens pour établir les connexions virtuelles vers la borne (BR) sous la couverture de laquelle se trouve un mobile ainsi que vers des bornes (BR) voisines de ladite borne (BR), caractérisé en ce qu'il comporte une table dans laquelle sont associées à chaque station (BR) au moins une station voisine, et au moins un processeur qui, à la réception d'une requête émise par une borne sous la couverture de laquelle vient d'arriver un mobile et identifiant, d'une part, ladite borne d'accueil et, d'autre part, la communication correspondante, détermine, dans un premier temps, les bornes associées à ladite borne d'accueil et, à partir de l'identification de la communication, les bornes associées à la borne sous la couverture de laquelle se trouvait auparavant ledit mobile, déduit, dans un second temps, les bornes vers lesquelles les connexions doivent être établies et les bornes vers lesquelles les connexions doivent être libérées, transmet, dans un troisième temps, aux concentrateurs auxquels lesdites bornes sont reliées un message pour commander lesdits concentrateurs afin qu'ils puissent créer ou libérer les liens correspondants.

11. Réseau selon la revendication 10, caractérisé en ce qu'il comporte un unique processeur centralisé, et en ce que, pour permettre la transmission de ladite requête audit processeur centralisé, ledit réseau de distribution est prévu pour établir en permanence, d'une part, entre chaque borne dudit réseau et chaque concentrateur un canal identifié par un unique couple d'identificateurs de conduits et canaux virtuels, et, d'autre part, entre chaque concentrateur et ledit processeur un canal identifié par un identificateur de conduit virtuel représentatif de l'adresse dudit concentrateur dans ledit réseau et par un identificateur de canal virtuel représentatif de l'adresse de ladite borne sur ledit concentrateur.

12. Réseau selon la revendication 11, caractérisé en ce que ledit réseau est prévu pour diffuser ledit message à l'ensemble des concentrateurs dudit réseau.

13. Réseau selon la revendication 11, caractérisé en ce que ledit réseau est prévu pour transmettre ledit message à chaque concentrateur en point à point.

14. Réseau selon la revendication 10, caractérisé en ce qu'il comporte un processeur pour chaque concentrateur dudit réseau de distribution, un message étant transmis d'un processeur aux concentrateurs concernés par un canal de diffusion permanent.

15. Réseau selon la revendication 10, caractérisé en ce qu'il comporte un processeur pour chaque concentrateur dudit réseau de distribution, un message étant transmis d'un processeur aux concentrateurs concernés sur un canal établi de manière permanente entre deux concentrateurs.

16. Réseau selon la revendication 10, caractérisé en ce qu'il comporte un processeur pour chaque concentrateur dudit réseau de distribution, un message étant transmis entre un processeur et les concentrateurs concernés sur un canal virtuel établi de manière permanente et se présentant sous la forme d'un anneau virtuel sur lequel ledit message peut circuler de concentrateur à concentrateur.

## Patentansprüche

1. Verfahren zum Aufbauen der virtuellen Verbindungen eines Verteilungsnetzes eines lokalen Netzes mit Zugang zu mobilen Teilnehmern, das eine Vielzahl von Funkanschlüssen (BR) umfasst, die über Konzentratoren (CTR) mit dem Verteilungsnetz (RDL) verbunden sind, wobei jeder Funkanschluss (BR) eine Funkzelle abdeckt, in welcher er mit einem mobilen Teilnehmer in Verbindung stehen kann, wobei jeder Konzentrator (CTR) dafür vorgesehen ist, die virtuelle Verbindung von wenigstens einem Anschluss (BR) mit dem Verteilungsnetz (RDL) sicherzustellen, wobei das Netz Mittel zum Aufbau von virtuellen Verbindungen zu dem Anschluss (BR), unter dessen Abdeckung sich der mobile Teilnehmer befindet, sowie zu dem diesem Anschluss (BR) benachbarten Anschlüssen aufweist, dadurch gekennzeichnet, dass es darin besteht:
vorher mit jedem Anschluss (BR) des Zugangsnetzes wenigstens einen benachbarten Anschluss (BR) zu verbinden, um eine Makrozelle abzudecken, und
bei der Ankunft eines mobilen Teilnehmers unter der Abdeckung eines Anschlusses, Aufnahmeanschluss genannt, eine Anfrage, die den Aufnahmeanschluss und die entsprechende Kommunikation identifiziert, zu wenigstens einem Prozessor zu senden,
ausgehend von der Identifikation des Aufnahmeanschlusses die mit dem Aufnahmeanschluss verbundenen Anschlüsse und ausgehend von der Identifikation der Kommunikation die Anschlüsse zu ermitteln, die mit dem Anschluss verbunden sind, unter dessen Abdeckung sich der mobile Teilnehmer vorher befand,
daraus die Anschlüsse, zu welchen die Verbindungen aufgebaut werden müssen, und die Anschlüssen herzuleiten, zu welchen die Verbindungen freigegeben werden müssen, und
zu den Konzentratoren, mit welchen die Anschlüsse verbunden sind, eine Nachricht zu senden, um die Konzentratoren zu steuern, damit sie die entsprechenden Verbindungen erzeugen oder freigeben können.

2. Verfahren nach Anspruch 1, **dadurch gekennzeichnet,** dass die Freigabe der virtuellen Verbindungen zu den Anschlüssen, die mit dem alten Anschluss verbunden sind und die nicht mit dem Aufnahmeanschluss verbundenen sind, um eine vorher bestimmte Dauer verzögert wird.

3. Verfahren nach Anspruch 2 oder 3, **dadurch gekennzeichnet,** dass die Anfrage die Bezeichner für virtuelle Kanäle und Leitungen enthält, die für die Kommunikation verwendet werden.

4. Verfahren nach einem der vorhergehenden Ansprüche, **dadurch gekennzeichnet,** dass die Anfrage zu dem Konzentrator (CTR) übertragen wird, mit welchem der Aufnahmeanschluss durch einen Kanal verbunden ist, der dauerhaft aufgebaut und beim Aufnahmeanschluss durch ein einziges Paar von Bezeichnern für virtuelle Leitungen und Kanäle identifiziert ist, wobei die Anfrage dann vom Konzentrator zu dem oder zu jedem Prozessor auf einem Kanal gesendet wird, der einerseits durch einen Bezeichner für die virtuelle Leitung, der die Adresse des Konzentrators im Netz darstellt, und andererseits durch einen Bezeichner für den virtuellen Kanal identifiziert wird, der die Adresse des Anschlusses am Konzentrator darstellt.

5. Verfahren nach Anspruch 4, **dadurch gekennzeichnet,** dass die Nachricht zur Erzeugung und Freigabe der für die Erzeugung und Freigabe der betroffenen Verbindungen, die von dem oder jedem Prozessor übertragen wird, an die Gesamtheit der Konzentratoren des Netzes verteilt wird, die dann die Filterung durchführen.

6. Verfahren nach Anspruch 4, **dadurch gekennzeichnet,** dass es darin besteht, für jeden Konzentrator einen Prozessor vorzusehen, wobei eine Nachricht vom Prozessor eines Konzentrators zu jedem betroffenen Konzentrator für die Erzeugung und die Freigabe der Verbindungen über eine virtuelle Leitung gesendet wird, die dauerhaft zwischen dem Paar von Konzentratoren aufgebaut ist.

7. Verfahren nach Anspruch 4, **dadurch gekennzeichnet,** dass es darin besteht, für jeden Konzentrator einen Prozessor vorzusehen, wobei eine Nachricht vom Prozessor eines Konzentrators, der diese Anfrage empfangen hat, zu jedem betroffenen Konzentrator für die Erzeugung und die Freigabe der Verbindungen über eine virtuelle Leitung gesendet wird, die dauerhaft zwischen allen Konzentratoren aufgebaut ist.

8. Verfahren nach Anspruch 7, **dadurch gekennzeichnet,** dass jede virtuelle Leitung, die dauerhaft zwischen allen Konzentratoren aufgebaut ist, ein virtueller Ring ist, auf welchem eine Nachricht von Konzentrator zu Konzentrator zirkulieren kann.

9. Verfahren nach Anspruch 7, **dadurch gekennzeichnet,** dass eine Nachricht so oft übertragen wird wie es Konzentratoren gibt, die durch die Erzeugung oder Löschung der Makrozellen betroffen sind, wobei jeder Konzentrator die Nachricht nur berücksichtigt, wenn er für die Erzeugung oder Freigabe der Verbindungen eine Markierungsoperation für eine virtuelle Verbindung ausführen muss.

10. Lokales Netz mit Zugang zu mobilen Teilnehmern des Typs, der eine Vielzahl von Funkanschlüssen (BR) aufweist, die über Konzentratoren (CTR) mit einem Verteilungsnetz (RDL) verbunden sind, wobei jeder Funkanschluss (BR) eine Funkzelle abdeckt, in welcher er mit einem mobilen Teilnehmer in Verbindung stehen kann, wobei jeder Konzentrator (CTR) dafür vorgesehen ist, die virtuelle Verbindung von wenigstens eines Anschlusses (BR) mit dem Verteilungsnetz (RDL) sicherzustellen, wobei das Netz Mittel zum Aufbau der virtuellen Verbindungen zu dem Anschluss (BR), unter dessen Abdeckung sich ein mobiler Teilnehmer befindet, sowie zu diesem Anschluss (BR) benachbarten Anschlüssen (BR) aufweist, **dadurch gekennzeichnet,** dass es eine Tabelle aufweist, in welcher mit jeder Station (BR) wenigstens eine benachbarte Station und wenigstens ein Prozessor verbunden ist, der bei Empfang einer Anfrage, die von einem Anschluss, unter dessen Abdeckung ein mobiler Teilnehmer gerade angekommen ist, gesendet wird und einerseits den Aufnahmeanschluss und andererseits die entsprechende Kommunikation identifiziert, in einer ersten Zeit die mit dem Aufnahmeanschluss verbundenen Anschlüsse und ausgehend von der Identifikation der Kommunikation die Anschlüsse ermittelt, die mit dem Anschluss verbunden sind, unter dessen Abdeckung sich der mobile Teilnehmer vorher befand, in einer zweiten Zeit die Anschlüsse, zu welchen die Verbindungen aufgebaut werden müssen, und die Anschlüsse herleitet, zu welchen die Verbindungen freigegeben werden sollen, in einer dritten Zeit zu den Konzentratoren, mit welchen die Anschlüsse verbunden sind, eine Nachricht überträgt, um die Konzentratoren zu steuern, damit sie die entsprechenden Verbindungen erzeugen oder freigeben können.

11. Netz nach Anspruch 10, **dadurch gekennzeichnet,** dass es einen einzigen zentralisierten Prozessor aufweist und dass, um die Übertragung der Anfrage zum zentralisierten Prozessor zu gestatten, das Verteilungsnetz dafür vorgesehen ist, dauerhaft einerseits zwischen jedem Anschluss des Netzes und jedem Konzentrator einen Kanal, der durch ein einziges Paar von Bezeichnern für virtuelle Leitungen und Kanäle identifiziert ist, und andererseits zwischen Konzentrator und dem Prozessor einen Kanal aufzubauen, der durch einen Bezeichner für einen virtuellen Kanal identifiziert ist, der die Adresse des Konzentrators im Netz darstellt, und einen Bezeichner für einen virtuellen Kanal identifiziert ist, der die Adresse des Anschlusses am Konzentrator darstellt.

12. Netz nach Anspruch 11, **dadurch gekennzeichnet,** dass das Netz dafür vorgesehen ist, die Nachricht an die Gesamtheit der Konzentratoren des Netzes zu verteilen.

13. Netz nach Anspruch 11, **dadurch gekennzeichnet,** dass das Netz dafür vorgesehen ist, die Nachricht zu jedem Konzentrator von Punkt zu Punkt zu übertragen.

14. Netz nach Anspruch 10, **dadurch gekennzeichnet,** dass es einen Prozessor für jeden Konzentrator des Verteilungsnetzes aufweist, wobei eine Nachricht von einem Prozessor zu betroffenen Konzentratoren über einen dauerhaften Verteilungskanal übertragen wird.#

15. Netz nach Anspruch 10, **dadurch gekennzeichnet,** dass es einen Prozessor für jeden Konzentrator des Verteilungsnetzes aufweist, wobei eine Nachricht von einem Prozessor zu betroffenen Konzentratoren über einen Kanal übertragen wird, der dauerhaft zwischen den beiden Konzentratoren aufgebaut ist.

16. Netz nach Anspruch 10, **dadurch gekennzeichnet,** dass es einen Prozessor für jeden Konzentrator des Verteilungsnetzes aufweist, wobei eine Nachricht zwischen einem Prozessor und den betroffenen Konzentratoren über einen virtuellen Kanal übertragen wird, der dauerhaft aufgebaut ist und sich in Form eines virtuellen Ringes zeigt, auf welchem die Nachricht von Konzentrator zu Konzentrator zirkulieren kann.

## Claims

1. Method of establishing virtual connections of a distribution network of a local access network for mobiles of the type comprising a plurality of radio terminals (BR) linked, through the intermediary of concentrators (CTR), to said distribution network (RDL), each radio terminal (BR) covering a radio cell inside which it can be in communication with a mobile, each concentrator (CTR) being provided to ensure the virtual connection of at least one terminal (BR) with said distribution network (RDL), said network comprising means for establishing the virtual connections to the terminal (BR) under the coverage of which a mobile is located and to neighbouring terminals (BR) of said terminal (BR), **characterised in that** it consists in:
associating in advance with each terminal (BR) of said access network at least one neighbouring terminal (BR) so as to cover a macrocell, and
on the arrival of a mobile under the coverage of a terminal, termed welcome terminal, sending to at least one processor a request identifying said welcome terminal and the corresponding communication,
determining, from the identification of said welcome terminal, the terminals associated with said welcome terminal and, from the identification of the communication, the terminals associated with the terminal under the coverage of which said mobile was previously located,
deducing from it the terminals to which the connections must be established and the terminals to which the connections must be released, and
transmitting to the concentrators to which said terminals are linked a message to command said concentrators to create or release the corresponding links.

2. Method according to claim 1, characterised in that the release of the virtual connections to the terminals which are associated with the old terminal and which are not associated with said welcome terminal is delayed by a predetermined period of time.

3. Method according to claim 2 or 3, characterised in that said request contains the virtual channel and path identifiers assigned to the communication.

4. Method according to one of the preceding claims, characterised in that said request is transmitted to the concentrator (CTR) to which said welcome terminal is linked by a permanently established channel identified, at the level of said welcome terminal, by a unique pair of virtual path and channel identifiers, said request being then sent from said concentrator to said or to each processor on a channel identified, firstly by a virtual path identifier representative of the address of said concentrator in said network, and secondly by a virtual channel identifier representative of the address of said terminal on said concentrator.

5. Method according to claim 4, characterised in that said message for creating and releasing the virtual connections necessary for creating and releasing the relevant links transmitted by said or each processor is distributed to all the concentrators of the network who then carry out the filtering of same.

6. Method according to claim 4, characterised in that it consists in providing a processor for each concentrator, a message from the processor of a concentrator being transmitted to each relevant concentrator for the creation and release of said links by a virtual path permanently established between each pair of concentrators.

7. Method according to claim 4, characterised in that it consists in providing a processor for each concentrator, a message from the processor of a concentrator which has received said request being transmitted to each relevant concentrator for the creation and release of the links by a virtual path permanently established between all the concentrators.

8. Method according to claim 7, characterised in that each virtual path established permanently between all the concentrators is a virtual ring on which a message can circulate from concentrator to concentrator.

9. Method according to claim 7, characterised in that a message is transmitted as many times as there are concentrators affected by the creation or release of said links, each concentrator only taking into account said message that it must carry out an operation of virtual connection marking for the creation or release of said links.

10. Local access network for mobiles of the type comprising a plurality of radio terminals (BR) linked, through the intermediary of concentrators (CTR) to a distribution network (RDL), each radio terminal (BR) covering a radio cell inside which it can be in communication with a mobile, each concentrator (CTR) being provided to ensure the virtual connection of at least one terminal (BR) with said distribution network (RDL), said network comprising means for establishing the virtual connections to the terminal (BR) under the coverage of which a mobile is located and to neighbouring terminals (BR) of said terminal (BR), **characterised in** that it includes a table in which there are associated with each station (BR) at least one neighbouring station and at least one processor which, on receiving a request sent by a terminal under the coverage of which a mobile has just arrived and identifying, on the one hand, said welcome terminal and, on the other hand, the corresponding communication, determines, in a first time, the terminals associated with said welcome terminal and, from the identification of the communication, the terminals associated with the terminal under the coverage of which said mobile was previously located, deduces, in a second time, the terminals to which the connections must be established and the terminals to which the connections must be released, transmits, in a third time, to the concentrators to which said terminals are linked a message to command said concentrators so that they can create or release the corresponding links.

11. Method according to claim 10, characterised in that it comprises a single centralised processor, and in that, to permit the transmission of said request to said centralised processor, said distribution network is provided to establish permanently, firstly, between each terminal of said network and each concentrator a channel identified by a unique pair of virtual path and channel identifiers and, secondly, between each concentrator and said processor a channel identified by a virtual path identifier representative of the address of said concentrator in said network and by a virtual channel identifier representative of the address of said terminal on said concentrator.

12. Network according to claim 11, characterised in that said network is provided to distribute said message to all the concentrators of said network.

13. Network according to claim 11, characterised in that said network is provided to transmit said message to each concentrator in point-to-point.

14. Network according to claim 10, characterised in that it comprises a processor for each concentrator of said distribution network, a message being transmitted from a processor to the relevant concentrators via a permanent distribution channel.

15. Network according to claim 10, characterised in that it comprises a processor for each concentrator of said distribution network, a message being transmitted from a processor to the relevant concentrators on a channel established in a permanent manner between two concentrators.

16. Network according to claim 10, characterised in that it comprises a processor for each concentrator of said distribution network, a message being transmitted between a processor and the relevant concentrators on a virtual channel established in a permanent manner and appearing in the firm of a virtual ring on which said message can circulate from concentrator to concentrator.
